# EUROPEAN PATENT SPECIFICATION

(11) **EP 3 726 373 B1**
(45) Date of publication and mention of the grant of the patent: **06.03.2024**
(21) Application number: 20165768.1
(22) Date of filing: 26.03.2020
(51) Int. Cl.: G06F 8/36, G06F 8/34, G06F 8/35, G06F 16/9038

(54) **CREATING AN APP METHOD AND SYSTEM**
ERZEUGUNG EINES APP-VERFAHRENS UND -SYSTEMS
CRÉATION D'UN PROCÉDÉ D'APPLICATION ET SYSTÈME

(30) Priority: 15.04.2019 EP 19000184
(43) Date of publication of application: 21.10.2020
(73) Proprietor: Mendix Technology B.V., 3072 AP Rotterdam (NL)
(72) Inventor: Koelewijn, Andrej, 2587cs Den Haag (NL)
(74) Representative: Siemens Patent Attorneys

(56) References cited:
- US-A1- 2007 234 290

## Description

### Technical field

The present disclosure is directed, in general, to software development systems, in particular systems for developing apps, that may be used to build, test, deploy and iterate such apps (collectively referred to herein as product systems).

### Background

Recently, an increasing number of computer software products is used both for personal needs and for business needs in the form of applications, throughout the present patent document simply called "apps". Such apps may be used in a mobile context and may provide a specific set of functions. The present invention generally relates to the development of such apps.

Currently, there exist product systems and solutions which support app development. Such product systems may benefit from improvements.

US 2007/234290 A1 discloses a systems for providing or utilizing a software solutions bag of development components and enterprise knowledge. Managing reusable development components is suggested comprising providing a catalog of a plurality of development components to a user. The cataloged development components may include or reference at least a first development component of a first type and a second development component of a second type. A software solutions bag is then generated based on a user selection of at least one of the cataloged development components.

### Summary

Variously disclosed embodiments include methods and computer systems that may be used to facilitate creating an app.

According to a first aspect of the invention, a computer-implemented method of creating an app includes: providing an app development user interface (UI) to a user for developing the app; providing a search UI to the user for searching in a repository for storing artifacts which are reusable for app development; capturing the user's search intent in response to user interactions with the search UI; importing at least one artifact corresponding to the captured user's search intent from the repository to the application development UI; developing the app through the app development UI by using the imported at least one artifact; deploying the created app including releasing the created app to end users for who the created app 120 is then installable and activatable; storing at least one portion of the created and deployed app as artifact which is reusable for app development in the repository after a successful first deployment of the created app 120; and storing metadata of the stored at least one portion of the created and deployed app in the repository. By way of example, the described computer-implemented method may be carried out through operation of at least one processor.

According to a second aspect of the invention, a computer system is arranged and configured to execute the steps of this computer-implemented method of creating an app. In particular, the described computer system is arranged and configured to execute the following steps: providing an app development user interface (UI) to a user for developing the app; providing a search UI to the user for searching in a repository for storing artifacts which are reusable for app development; capturing the user's search intent in response to user interactions with the search UI; importing at least one artifact corresponding to the captured user's search intent from the repository to the ap-plication development UI; developing the app through the app development UI by using the imported at least one artifact; deploying the created app including releasing the created app to end users for who the created app 120 is then installable and activatable; storing at least one portion of the created and deployed app as artifact which is reusable for app development in the repository after a successful first deployment of the created app 120; and storing metadata of the stored at least one portion of the created and deployed app in the repository. By way of example, the computer system may comprise at least one processor configured to execute these described steps.

According to a third aspect of the invention, a computer-readable medium encoded with executable instructions, that when executed, cause the described computer system to carry out the described method of creating an app. By way of example, the described computer-readable medium may be non-transitory and may further be a software component on a storage device.

The foregoing has outlined rather broadly the technical features of the present disclosure so that those skilled in the art may better understand the detailed description that follows. Additional features and advantages of the disclosure will be described hereinafter that form the subject of the claims. Those skilled in the art will appreciate that they may readily use the conception and the specific embodiments disclosed as a basis for modifying or designing other structures for carrying out the same purposes of the present disclosure.

Also, before undertaking the detailed description below, it should be understood that various definitions for certain words and phrases are provided throughout this patent document and those of ordinary skill in the art will understand that such definitions apply in many, if not most, instances to prior as well as future uses of such defined words and phrases. While some terms may include a wide variety of embodiments, the appended claims may expressly limit these terms to specific embodiments.

### Brief description of the drawings

- Fig. 1: illustrates a functional block diagram of an example system that facilitates creating an app in a product system.
- Figs. 2-11: illustrate a series of exemplary graphical user interfaces comprising results that may be displayed to a user using the product system shown in Fig. 1.
- Fig. 12: illustrates a flow diagram of an example methodology that facilitates creating apps in a product system.
- Fig. 13: illustrates a block diagram of a data processing system in which an embodiment can be implemented.
- Figs. 14-18: illustrate further information on facilitating creating an app in a product system.

### Detailed description

Various technologies that pertain to systems and methods for creating an app in a product system will now be described with reference to the drawings, where like reference numerals represent like elements throughout. The drawings discussed below, and the various embodiments used to describe the principles of the present disclosure in this patent document are by way of illustration only and should not be construed in any way to limit the scope of the disclosure. Those skilled in the art will understand that the principles of the present disclosure may be implemented in any suitably arranged apparatus. It is to be understood that functionality that is described as being carried out by certain system elements may be performed by multiple elements. Similarly, for instance, an element may be configured to perform functionality that is described as being carried out by multiple elements. The numerous innovative teachings of the present patent document will be described with reference to exemplary non-limiting embodiments.

An app generally refers to a software program which on execution performs specific desired tasks. In general, several apps are executed in a runtime environment containing one or more operating systems ("OSs"), virtual machines (e.g., supporting Java^{™} programming language), device drivers, etc.

Apps can be created, edited, and represented using traditional source code. Examples of such traditional source code include C, C++, Java, Flash, Python, Perl, and other script-based methods of representing an app. Developing and creating such script-based apps, or parts of such script-based apps can be accomplished by manual coding of suitably trained users.

Developers often use Application Development Frameworks ("ADFs") (which are by themselves applications or apps) for implementing/developing desired apps. An ADF provides a set of pre-defined code/data modules that can be directly/indirectly used in the development of an app. An ADF may also provide tools such as an Integrated Development Environment ("IDE"), code generators, debuggers, etc., which facilitate a developer in coding/implementing the desired logic of the app in a faster/simpler manner.

In general, an ADF simplifies app development by providing reusable components which can be used by app developers to define user interfaces ("UIs") and app logic by, for example, selecting components to perform desired tasks and defining the appearance, behavior, and interactions of the selected components. Some ADFs are based on a model-view-controller design pattern that promotes loose coupling and easier app development and maintenance.

According to another approach, apps can also be created, edited, and represented using visual model-based representations. Unlike traditional source code implementations, such apps can be created, edited, and/or represented by drawing, moving, connecting, and/or disconnecting visual depictions of logical elements within a visual modeling environment. Visual-model based representations of apps can use symbols, shapes, lines, colors, shades, animations, and/or other visual elements to represent logic, data or memory structures or user interface elements. In order to program a traditional script-based app, programmers are typically required to type out detailed scripts according to a complicated set of programming syntax rules. In contrast, programming a visual model-based app can, in some cases, be done by connecting various logical elements (e.g., action blocks and/or decision blocks) to create a visual flow chart that defines the app's operation. Similarly, defining data structures (e.g., variable types, database objects, or classes) and/or user interface elements (e.g., dropdown boxes, lists, text input boxes) in a visual model-based app can be done by drawing, placing, or connecting visual depictions of logical elements within a virtual workspace, as opposed to typing out detailed commands in a script. Visual-model based apps can therefore be more intuitive to program and/or edit compared to traditional script-based apps.

For brevity, references to a "model," a "visual model," or an "application" or "app" may be understood to refer to visual model-based apps unless specifically indicated. In some cases, such visual model-based apps can represent complete, stand-alone apps for execution on a computer system. Visual model-based apps can also represent discrete modules that are configured to perform certain tasks or functions, but which do not represent complete apps-instead, such discrete modules can be inserted into a larger app or combined with other discrete modules to perform more complicated tasks. Example of such discrete modules can include modules for validating a ZIP code, for receiving information regarding current weather from a weather feed, and/or for rendering graphics.

Visual models can be represented in two forms: an internal representation and one or more associated visual representations. The internal representation can be a file encoded according to a file format used by a modeling environment to capture and define the operation of an app (or part of an app). For example, the internal representation can define what inputs an app can receive, what outputs an app can provide, the algorithms and operations by which the app can arrive at results, what data the app can display, what data the app can store, etc. The internal representation can also be used to instruct an execution environment how to execute the logic of the app during runtime. Internal representation can be stored in the form of non-human-readable code (e.g., binary code). Internal representation can also be stored according to a binary stored JSON (java script object notation) format, and/or an XML format. At runtime, an execution engine can use internal representation to compile and/or generate executable machine code that, when executed by a processor, causes the processor to implement the functionality of the model.

The internal representation can be associated with one or more visual representations. Visual representations can comprise visual elements that depict how an app's logic flows, but which are not designed to be compiled or executed. These visual representations can comprise, for example, flowcharts or decision trees that show a user how the app will operate. The visual models can also visually depict data that is to be received from the user, data that is to be stored, and data that is to be displayed to the user. These visual models can also be interactive, which allows a user to manipulate the model in an intuitive way. For example, visual representations can be configured to display a certain level of detail (e.g., number of branches, number of displayed parameters, granularity of displayed logic) by default. However, users can interact with the visual representation in order to show a desired level of detail-for example, users can display or hide branches of logic, and/or display or hide sets of parameters. Details relating to an element of the visual model can be hidden from view by default but can appear in a sliding window or pop-up that appears on-screen when the user clicks on the appropriate element. Users can also zoom in or out of the model, and/or pan across different parts of the model, to examine different parts of the model. Users can also copy or paste branches of logic from one section of the model into another section, or copy/paste branches of logic from a first model into a second model. In some cases, parts of the model can contain links to other parts of the model, such that if a user clicks on a link, the user will automatically be led to another part of the model. A viewing user can interact with a visual representation in at least some of the same ways that the viewing user might interact with the model if it were displayed within a modeling environment. In other words, the visual representation can be configured to mimic how the model would appear if it were displayed within a visual modeling environment. A single internal representation can correspond to multiple visual representations that use different styles or formatting rules to display app logic. For instance, multiple visual representations corresponding to the same internal representation can differ from one another in their use of color, elements that are included or omitted, and use of symbols, shapes, lines, colors, and/or shades to depict logic flow.

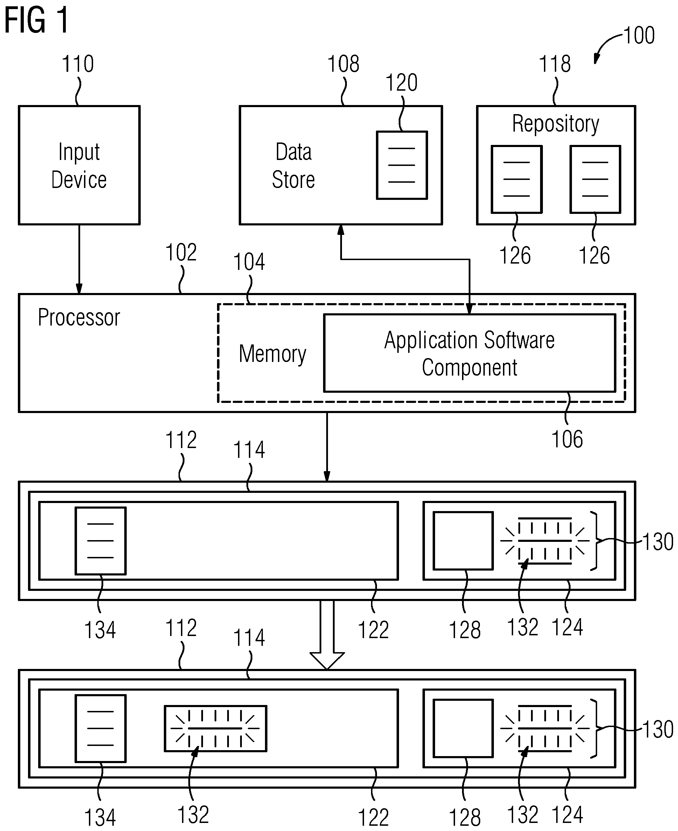

With reference to Fig. 1, an example computer system or data processing system 100 is illustrated that facilitates creating an app. The processing system 100 may include at least one processor 102 that is configured to execute at least one application software component 106 from a memory 104 accessed by the processor 102. The application software component 106 may be configured (i.e., programmed) to cause the processor 102 to carry out various acts and functions described herein. For example, the described application software component 106 may include and/or correspond to one or more components of an app development application that is configured to generate and store product data in a data store 108 such as a database.

Examples of product systems that may be adapted to include the app creation features described herein may include the low-code software platform of Mendix Technology B.V., of Rotterdam, The Netherlands. This platform provides tools to build, test, deploy and iterate apps and is based on visual, model-driven software development. However, it should be appreciated that the systems and methods described herein may be used in other product systems (e.g., PLM, PDM, ERP, ALM systems) and/or any other type of system that generates and stores product data in a database. Also, examples of databases that may be used as one or more data stores described herein include database server applications such as Oracle, Microsoft SQL Server, or any other type of data store that is operative to store data records.

By way of example, creating the app includes using visual model-based representations, e.g., included in a visual, model-driven software development platform, e.g., a low-code software platform. The visual model-based representations may, in some embodiments, be those described above which can be used to create, edit and represent apps. Further, the visual, model-driven software development platform may, e.g., provide tools to build, test, deploy and/or iterate apps.

It should be appreciated that it can be difficult and time-consuming to create apps in complex app development environments. For example, advanced coding knowledge of users may be required, or selections of many options need to be made consciously, both involving many manual steps, which is a long and not efficient process.

To enable the enhanced creation of apps, the described product system or processing system 100 may include at least one input device 110 and at least one display device 112 (such as a display screen). The described processor 102 is configured to generate a GUI 114 through the display device 112. Such a GUI may include GUI elements such as buttons, links, search boxes, lists, text boxes, images, scroll bars) usable by a user to provide inputs through the input device 110 that cause creating an app. In particular, the GUI comprises an app development UI to a user for developing the app and a search UI to the user for searching in a repository 118 for storing artifacts which are reusable for app development.

In an example embodiment, the application software component 106 and/or the processor 102 is configured to provide an app development UI 122 to a user for developing the app 120 and to provide a search UI 124 to the user for searching in a repository 118 for storing artifacts 126 which are reusable for app development. To enhance the creation of the app 120, the application software component 106 and/or the processor 100 to may be is configured to capture the user's search intent in response to user interactions with the search UI 124 and to import at least one artifact 132 corresponding to the captured user's search intent from the repository 118 to the app development UI 122. The application software component 106 and/or the processor 102 is configured to develop the app 120 through the app development UI 122 by using the imported at least one artifact 132. Further, the application software component 106 and/or the processor 102 is configured to deploy the created app 120, to store at least one portion of the created and deployed app as artifact 126 which is reusable for app development in the repository 118, and to store metadata of the stored at least one portion 126 of the created and deployed app 120 in the repository 118.

The deployment of the created app 120 includes the release of the app 120 to users which may then install and activate the released app to fulfill their specific personal or business needs. By way of example, after successful first deployment, the at least one portion is stored in the repository 118 as an artifact 126 which is available for reuse for app development. Additionally, metadata of the stored portion may also be stored in the repository 118.

The provided app development UI 122 may, by way of example, interact with an ADF, IDE or visual model-based representations which are mentioned above which may be used to develop the app. The app development UI 122 as well as the search UI 124 may be displayed to the user using the display device 112. The user may provide his search intent via his input to the search UI 124 using the input device 110. Through interaction with the search UI 124 the user can search for suitable artifacts 126 which are stored in the repository 118 and which are reusable for app development. The repository 118 may be a data store or memory which is accessible to the user via the search UI 124. The repository 118 may contain artifacts 126 of the user or other users. At least one artifact 132 which corresponds to the captured user's search intent may be selected among the artifacts 126 stored in the repository 118 and imported from the repository 118 to the app development UI 122. By way of example, the import can be done by "drag and drop" in the app development UI 122. Using the imported at least one artifact 132, the app 120 is developed through the app development UI 122 which may interact, by way of example, with an ADF, IDE or visual model-based representations to accomplish the development of the app 120.

In some examples, the import of the artifact may include importing software libraries or the like. For the import of the artifact, e.g., a frozen reference may be used for incorporating current amendments at the reference target into the app to be developed or created, wherein future amendments of said reference target shall not automatically be incorporated in the app to be developed or created. In other examples, the import of the artifact may include creating connections to running services, so that the app to be developed or created is linked to services, other apps or the like which are in operation and may provide updated information regularly, event-based and/or on request to the completed or deployed app to be developed or created. Such a connection to running services may, e.g., be understood as a live reference allowing for incorporating future information available at the reference target so that updated, and always up-to-date information may be retrieved from the reference target by the completed or deployed app to be developed or created.

In other words, the import of the artifact may include making use of static information, e.g. software libraries, frozen references and/or the information available at the reference target, or the like, or of dynamic information, e.g., by creating or using connections to running services and/or the information available at the connections target, live references and/or the information available at the reference target, or the like. The import may, in some examples, be such that the respective information may be used during the development and/or the creation phase of the app or even during the deployment and/or operation of the created app.

The search UI 124 may comprise an input box 128 for the user to input his search intent. The app development UI 122 may already include some other app parts 134 of the currently developed app 120.

It should be appreciated that generally the invention may facilitate visually modelling connections to assets such as artifacts provided by other apps/services, wherein all or almost all or almost all software assets, e.g. within an organization, provided by other services are made discoverable, and wherein the technical construction of the actual connectivity is abstracted to use the asset provided by the other application.

In example embodiments, application software component 106 and/or the processor 102 may be configured to display a set of artifacts 130 stored in the repository 118 and corresponding to the captured user's search intent in the search UI 124 and to capture the user's intent to reuse at least one artifact 132 of the displayed set of artifacts 130 in response to user interactions with the search UI 124.

The displayed set of artifacts 130 may each correspond at least to a certain extent the captured user's search intent and may be displayed in the search UI 124 using the display device 112. By way of example, a certain number of artifacts are displayed which have the greatest extent of correspondence with the captured user's search intent among the artifacts 116 available in the repository 118. By interacting with the search UI 124, the user may select among the displayed set of artifacts 130, e.g. providing corresponding input using the input device 110. The user's intent to reuse at least one artifact 132 of the displayed set of artifacts 130 is captured. By way of example, only those artifacts 132 are imported from the repository 118 to the app development UI 122 which have been selected by the user for reuse.

For these examples, the application software component 106 and/or the processor 102 may be configured to retrieve metadata of the artifacts 126 stored in the repository 118, to determine a ranking of the artifacts 126 stored in the repository 118 corresponding to a degree of conformance of the retrieved metadata with the captured user's search intent, and to display the set of artifacts 130 according to the determined ranking of the artifacts.

Metadata of the artifact 126 stored in the repository 118 may be analyzed in view of the captured user's search intent in order to determine a degree of conformance of the metadata with the captured user's search intent. The degree of conformance may, by way of example, relate to an artifact similarity for which the type of artifact, e.g. an app, the application area of the app or the purpose of the app may be considered provoked. This degree of conformance may then be used to determine a ranking of the artifact stored in the repository. The ranking may involve comparing, e.g., popularity of an artifact, for example the number of deployments for a given app, matching of keywords, similarity of artifacts, e.g. application or use areas of the artifacts are purpose of the artifact, or any combination thereof. By way of example, a certain number of artifacts 130 are displayed which metadata has the greatest degree of conformance with the captured user's search intent among the artifacts 126 available in the repository 118. In an alternative example, those artifacts 130 are displayed which metadata exceed a certain minimum degree of conformance with the captured user's search intent.

It should also be appreciated that for these examples, the metadata may include at least one of artifact owner, artifact tags, artifact descriptions, artifact key words, artifact popularity, artifact versions, artifact purposes, artifact areas, or any combination thereof, wherein artifact popularity relates to the number of deployments for a given app and wherein artifact similarity relates to the application area or the use areas of the respective artifact.

By way of example, the popularity may be measured or compared by the number of deployments for a given app or a given artifact. Further or alternatively, the popularity may, e.g., be measured or compared by the number of connections and usages of a given artifact. For the number of connections and usages, the number of imports of the respective artifact for app development or creation of other apps may be considered or the number of apps which have been developed or created by importing the respective artifact. In further examples, the artifact description may include certain keywords.

In further examples, the artifacts may include at least one of app data, app components, app architecture, app programming interfaces (APIs), app services, app usages, app links, app description, app dependencies, artifact dependencies, app environments, app tags, business events, notifications, app interfaces, trigger information, user interface (UI) designs, knowledge graphs, maps of reusable IT assets, links to pages, or any combination thereof.

The mentioned app characteristics may also be embodied as corresponding artifact characteristics. The app dependencies may in particular be of such kind that an amendment to the source artifact or system will affect the target artefact or system to which the artifact is imported in known or predictable way. This may help to ensure a "safe" installation or deployment of new apps or software by validating all changes and dependencies are correct.

By way of example, the business events, notifications and/or trigger information may generally be data available and/or sent from another app, service or generally data source that may cause to trigger an action in or through the app to be created. E.g., initially a new user or customer subscribes or registers to a system or service and then an action is triggered in or with help of the app to be created, e.g. creating a new account or tenant, e.g. in an IIoT system, sending documents or a confirmation, providing access to the new user or customer, displaying updated status info, provisioning another app, or the like. In other examples, the business events, notifications and/or trigger information may include the purchase of an item, the completion of one, several or all steps of production of a hardware and/or software product, the availability or non-availability of an item or a given number of items. The app interfaces may, e.g., include information on ingoing and/or outgoing information of an app, supported or accepted data protocols, supported or accepted encryption protocols, or the like. Additionally, or alternatively, other apps may subscribe to the app to be created, provide corresponding trigger information or the like to the app to be created and cause certain actions to be carried out. By way of example, the app to be created may be used as a data source for data consuming, overlaying apps, wherein the overlaying app may subscribe to the underlying app, the subscription being the trigger information, and the underlying app provides relevant data to the overlaying app by request, upon availability of relevant data, and/or at a given frequency.

As mentioned above, the artifacts may include app links, links to pages or generally links. These links may originate from other apps or services where they may be used during operation of the app or service and may be available for import in the repository. The import of artifacts may also include the examples explained above in the context of software libraries, connections to running services, frozen references, live references, static or dynamic information.

The large variety of artifacts that may be used for app development and/or app creation may be considered as a data catalog in which many if not all sorts of available information, data, services and/or apps in an organization or company are made available for use. This data catalog may include information, data, services and/or apps from product lifecycle management, enterprise resource planning, product design, manufacturing operations, or the like. By way of example, the data catalog may include operations to be used in other apps, services, metrics, streaming data, events, business events and/or generally data sets, e.g., including the business events, notifications and/or trigger information explained above. In this way, a heterogeneous landscape of available information, e.g. software applications may be normalized such that it may be used to develop, create and/or even operate apps.

It should also be appreciated that in other examples, the app development UI 122 may be accessible to the user through a browser or a client, and the search UI 124 may be accessible to the user through the app development UI 122.

In further examples, the created app 120 and/or the artifacts stored in the repository 126 may include standardized modules concerning at least one of data providers, data consumers, data update mechanisms, data formats, available data treatment operations, app identity and access management (IAM), or any combination thereof.

Such standardized modules may help to create favorable low-code abstractions which allow the user to import artifacts or parts of apps, whereby no detailed knowledge of the imported information is required. The data update mechanism may, by way of example involve a periodic data update or a push or pull data update. Such features may support automatic and correct integration and synchronization of imported artifacts, parts of apps or apps from the development environment, in particular based on the metadata available in the repository when the user selects a found artifact for reuse. This allows to establish dependencies between an artifact 126 stored in the repository 118 and an app for which this artifact 120 is reused for app development. The established dependency then becomes part of the metadata of the deployed app and for every deployment the repository 118 will be informed that the dependency exists in one or more deployed states by updating the corresponding metadata accordingly.

For some examples, the stored metadata may include at least one of deployment information, app services, and information on a dependency between the stored at least one portion of the created and deployed app and the imported at least one artifact which has been used for developing the created and deployed app, or any combination thereof.

It should also be appreciated that in other examples, the application software component 106 and/or the processor 102 may be configured to update the stored at least one portion in the repository 118 upon amending the at least one portion in the developed and deployed app 120 and/or to update the stored metadata of the stored at least one portion in the repository 118 upon amending the metadata of the stored at least one portion.

For such examples, the stored metadata of the stored at least one portion may include information on access rights for accessing the stored at least one portion, wherein the stored at least one portion may only be accessible to users having suitable access rights.

For such examples, the stored metadata of the stored at least one portion may include information on access rights for deploying and/or using app which are developed using the stored at least one portion, wherein the stored at least one portion may only be accessible to users having suitable access rights and/or the developed app may only be deployed and/or used by users having suitable access rights.

For all the examples, the created app may be suitable for deployment to hardware devices including smartphones, handheld computers, tablet computers, desktop computers, smartwatches, TVs, to cloud computing platforms or to Internet of Things (IoT) operating systems, in particular Industrial Internet of Things (IIoT) systems.

The described examples may provide an efficient way for users to create apps by enabling the described enhanced creation of apps. Thus, the described examples may reduce the total cost of ownership of the creation or development of apps and of such apps in general, by alleviating or at least minimizing the need for users or administrators to have advanced coding knowledge or to manually make conscious selections of many options. Such efficient app creation can be leveraged in any industry (e.g., Aerospace & Defense, Automotive & Transportation, Consumer Products & Retail, Electronics & Semiconductor, Energy & Utilities, Industrial Machinery & Heavy Equipment, Marine, or Medical Devices & Pharmaceuticals). Such app creation may also be applicable to consumer facing the need to quickly create own apps.

In particular, the above examples are equally applicable to the computer-implemented method of creating an app and to the corresponding computer-readable medium explained in the present patent document, respectively.

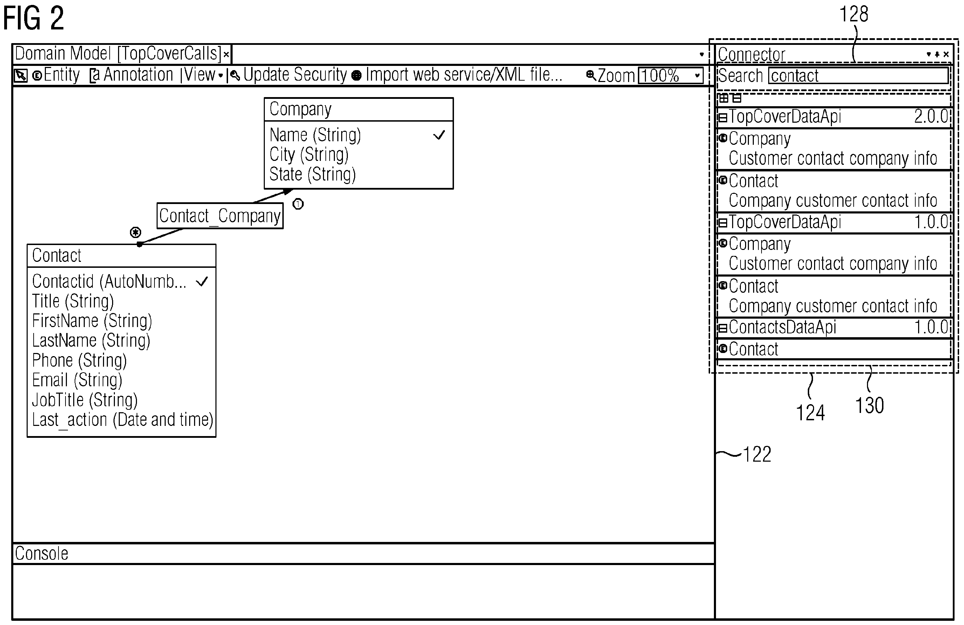

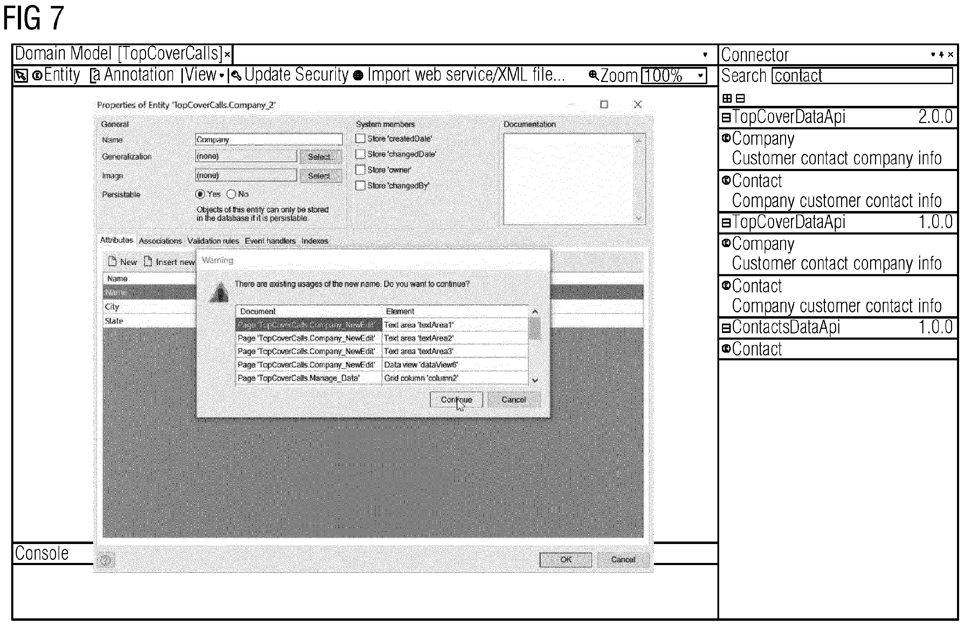

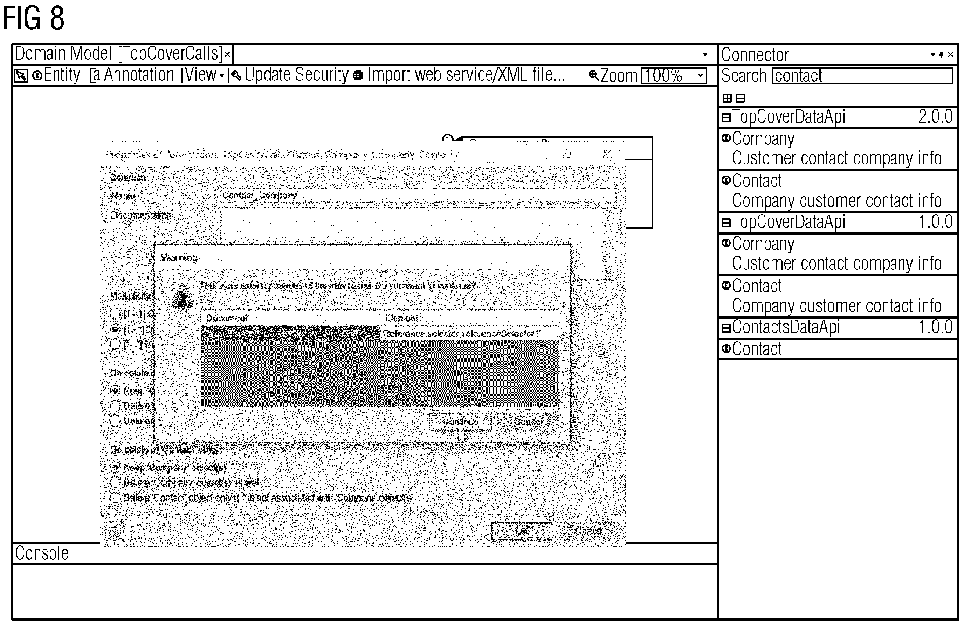

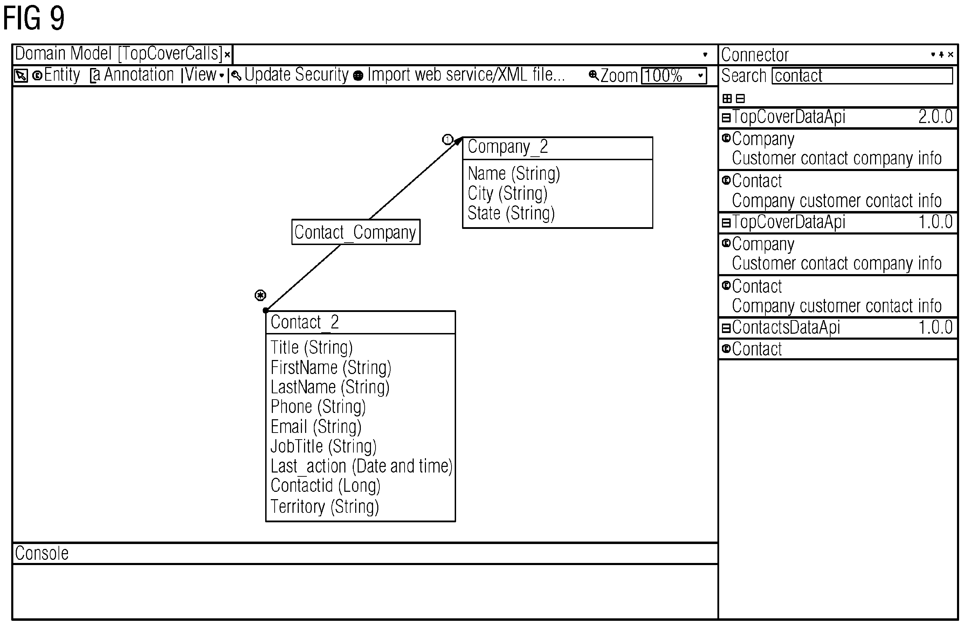

Referring now to Figs. 2-11, a series of exemplary graphical user interfaces is illustrated comprising results that may be displayed to a user using the product system shown in Fig. 1.

Fig. 2 illustrates an exemplary GUI including an app development UI 122 which contains other app parts of the currently deployed app. The exemplary GUI furthermore includes a search UI 124 including an input box 128 which allows a user to input the search intent. The search UI 124 furthermore includes a set of artifacts 130 that correspond to the captured user's search intent.

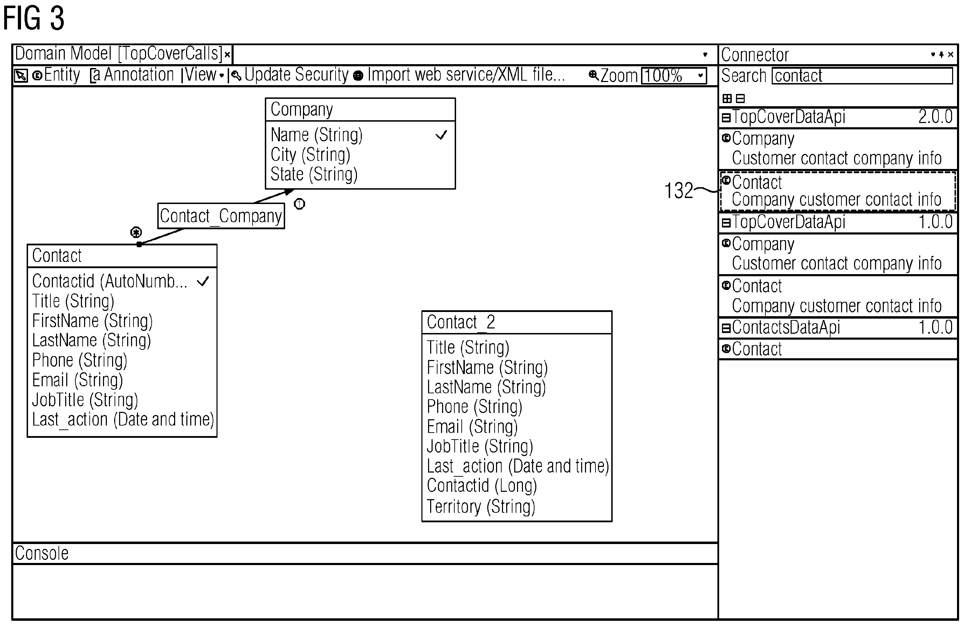

Fig. 3 illustrates that upon selection by the user of one artifact 132 of the set of artifacts 130, the selected artifact 132 is imported into the app development UI. In this example, the user selected the artifact "Contact" which is then imported to the app development UI 122 as a new box.

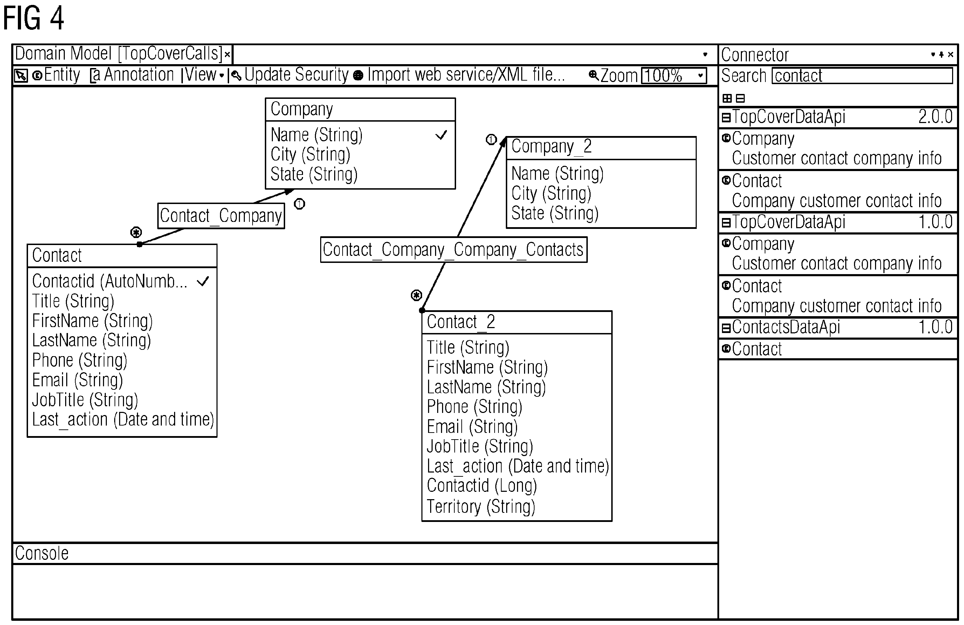

Fig. 4 illustrates that the user furthermore imports the artifact "Company" to the app development UI 122.

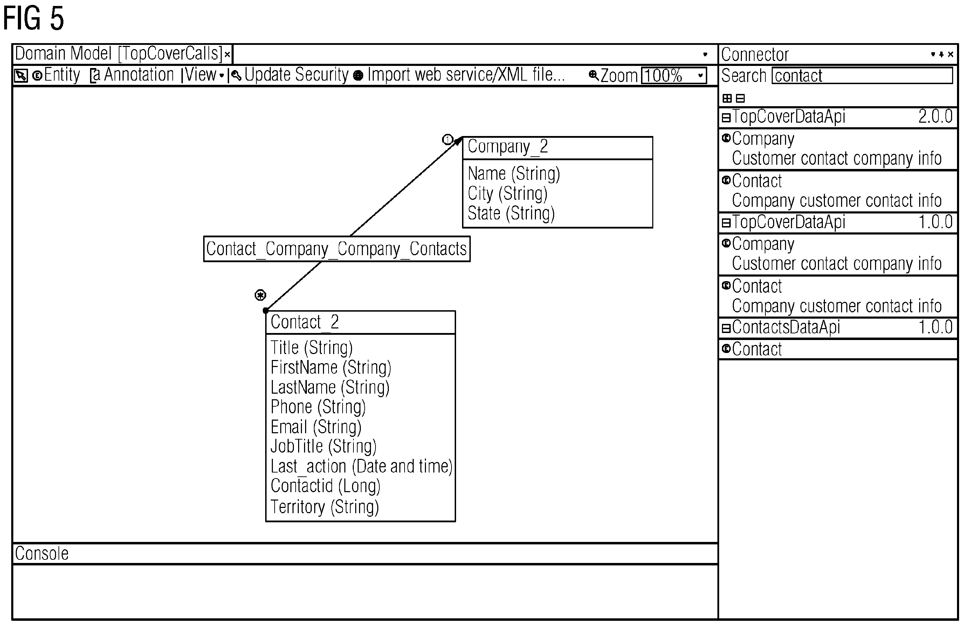

Fig. 5 illustrates that the user has removed all other artifact except the recently imported to artifacts "Contact" and "Company".

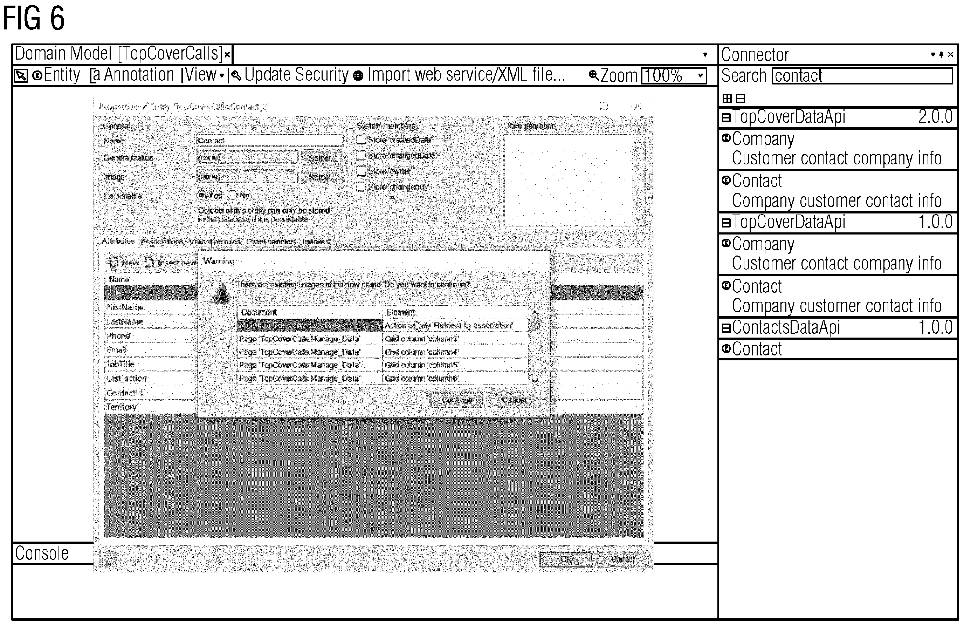

Figs. 6-9 illustrate how the user adapts the properties of the two imported artifacts "Contact" and "Company" as well as a relation link indicated with "Contact_Company".

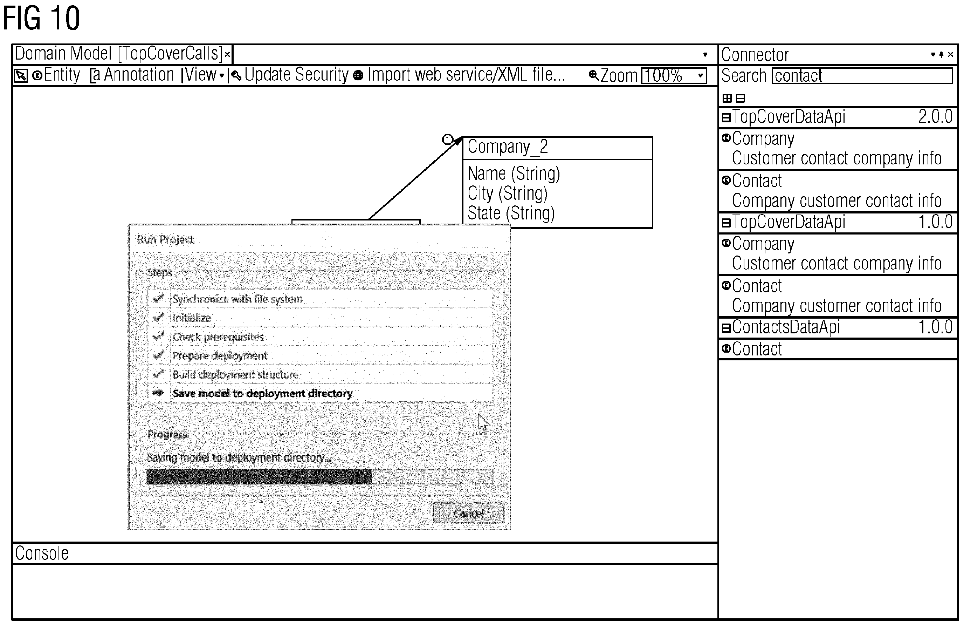

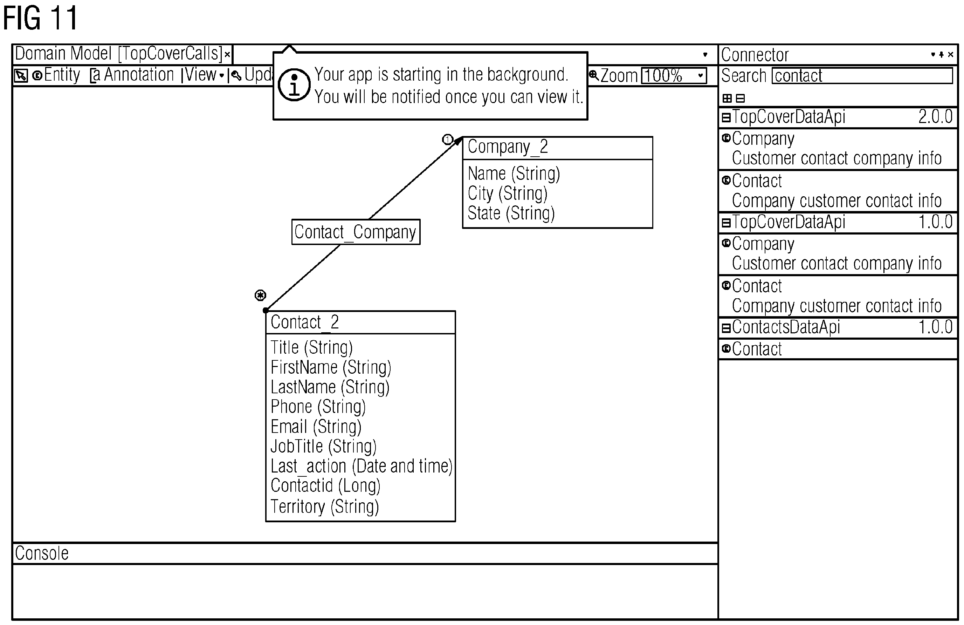

Figs. 10 & 11 illustrate how the thus developed app may be run and deployed using the app development UI 122.

It is important to note that while the disclosure includes a description in the context of a fully functional system and/or a series of acts, those skilled in the art will appreciate that at least portions of the mechanism of the present disclosure and/or described acts are capable of being distributed in the form of computer-executable instructions contained within non-transitory machine-usable, computer-usable, or computer-readable medium in any of a variety of forms, and that the present disclosure applies equally regardless of the particular type of instruction or data bearing medium or storage medium utilized to actually carry out the distribution. Examples of non-transitory machine usable/readable or computer usable/readable mediums include: ROMs, EPROMs, magnetic tape, floppy disks, hard disk drives, SSDs, flash memory, CDs, DVDs, and Blu-ray disks. The computer-executable instructions may include a routine, a sub-routine, programs, applications, modules, libraries, a thread of execution, and/or the like. Still further, results of acts of the methodologies may be stored in a computer-readable medium, displayed on a display device, and/or the like.

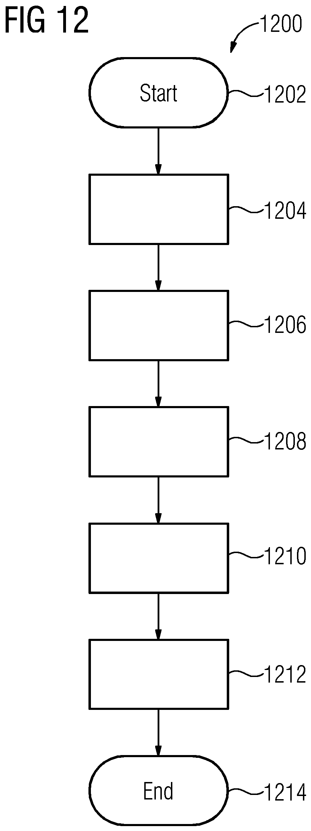

Referring now to Fig. 12, a methodology 1200 that facilitates creating apps is illustrated. The method may start at 1202 and the methodology may include several acts carried out through operation of at least one processor.

These acts may include an act 1204 of providing an app development user interface (UI) to a user for developing the app; an act 1206 of providing a search UI to the user for searching in a repository for storing artifacts which are reusable for app development; an act 1208 of capturing the user's search intent in response to user interactions with the search UI; an act 1210 of importing at least one artifact corresponding to the captured user's search intent from the repository to the ap-plication development UI; and an act 1212 of developing the app through the app development UI by using the imported at least one artifact. At 1214 the methodology may end.

It should be appreciated that the methodology 900 may include other acts and features discussed previously with respect to the processing system 100. For example, the methodology may include the act of displaying a set of artifacts stored in the repository and corresponding to the captured user's search intent in the search UI; and the act of capturing the user's intent to reuse at least one artifact of the displayed set of artifacts in response to user interactions with the search UI.

In addition the methodology may include the act of retrieving metadata of the artifacts stored in the repository; the act of determining a ranking of the artifacts stored in the repository corresponding to a degree of conformance of the retrieved metadata with the captured user's search intent; and the act of displaying the set of artifacts according to the determined ranking of the artifacts.

Further, the methodology may include the act of deploying the created app; the act of storing at least one portion of the created and deployed app as artifact which is reusable for app development in the repository; and the act of storing metadata of the stored at least one portion of the created and deployed app stored in the repository.

Example embodiments of the methodology may also include the act of updating the stored at least one portion in the repository upon amending the at least one portion in the developed and deployed app and/or the act of updating the stored metadata of the stored at least one portion in the repository upon amending the metadata of the stored at least one portion.

As discussed previously, acts associated with these methodologies (other than any described manual acts such as an act of manually making a selection through the input device) may be carried out by one or more processors. Such processor(s) may be included in one or more data processing systems, for example, that execute software components operative to cause these acts to be carried out by the one or more processors. In an example embodiment, such software components may comprise computer-executable instructions corresponding to a routine, a sub-routine, programs, applications, modules, libraries, a thread of execution, and/or the like. Further, it should be appreciated that software components may be written in and/or produced by software environments/languages/frame-works such as Java, JavaScript, Python, C, C#, C++ or any other software tool capable of producing components and graphical user interfaces configured to carry out the acts and features described herein.

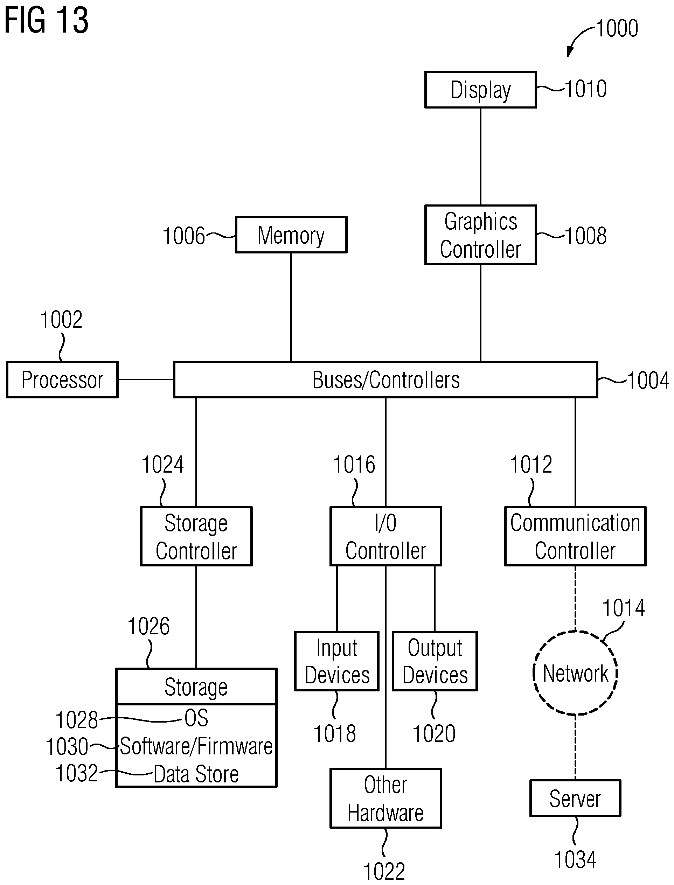

Fig. 13 illustrates a block diagram of a data processing system 1000 (also referred to as a computer system) in which an embodiment can be implemented, for example, as a portion of a product system, and/or other system operatively configured by software or otherwise to perform the processes as described herein. The data processing system depicted includes at least one processor 1002 (e.g., a CPU) that may be connected to one or more bridges/controllers/buses 1004 (e.g., a north bridge, a south bridge). One of the buses 1004, for example, may include one or more I/O buses such as a PCI Express bus. Also connected to various buses in the depicted example may include a main memory 1006 (RAM) and a graphics controller 1008. The graphics controller 1008 may be connected to one or more display devices 1010. It should also be noted that in some embodiments one or more controllers (e.g., graphics, south bridge) may be integrated with the CPU (on the same chip or die). Examples of CPU architectures include IA-32, x86-64, and ARM processor architectures.

Other peripherals connected to one or more buses may include communication controllers 1012 (Ethernet controllers, WiFi controllers, cellular controllers) operative to connect to a local area network (LAN), Wide Area Network (WAN), a cellular network, and/or other wired or wireless networks 1014 or communication equipment.

Further components connected to various busses may include one or more I/O controllers 1016 such as USB controllers, Bluetooth controllers, and/or dedicated audio controllers (connected to speakers and/or microphones). It should also be appreciated that various peripherals may be connected to the I/O controller(s) (via various ports and connections) including input devices 1018 (e.g., keyboard, mouse, pointer, touch screen, touch pad, drawing tablet, trackball, buttons, keypad, game controller, gamepad, camera, microphone, scanners, motion sensing devices that capture motion gestures), output devices 1020 (e.g., printers, speakers) or any other type of device that is operative to provide inputs to or receive outputs from the data processing system. Also, it should be appreciated that many devices referred to as input devices or output devices may both provide inputs and receive outputs of communications with the data processing system. For example, the processor 1002 may be integrated into a housing (such as a tablet) that includes a touch screen that serves as both an input and display device. Further, it should be appreciated that some input devices (such as a laptop) may include a plurality of different types of input devices (e.g., touch screen, touch pad, keyboard). Also, it should be appreciated that other peripheral hardware 1022 connected to the I/O controllers 1016 may include any type of device, machine, or component that is configured to communicate with a data processing system.

Additional components connected to various busses may include one or more storage controllers 1024 (e.g., SATA). A storage controller may be connected to a storage device 1026 such as one or more storage drives and/or any associated removable media, which can be any suitable non-transitory machine usable or machine-readable storage medium. Examples include nonvolatile devices, volatile devices, read only devices, writable devices, ROMs, EPROMs, magnetic tape storage, floppy disk drives, hard disk drives, solid-state drives (SSDs), flash memory, optical disk drives (CDs, DVDs, Blu-ray), and other known optical, electrical, or magnetic storage devices drives and/or computer media. Also, in some examples, a storage device such as an SSD may be connected directly to an I/O bus 1004 such as a PCI Express bus.

A data processing system in accordance with an embodiment of the present disclosure may include an operating system 1028, software/firmware 1030, and data stores 1032 (that may be stored on a storage device 1026 and/or the memory 1006). Such an operating system may employ a command line interface (CLI) shell and/or a graphical user interface (GUI) shell. The GUI shell permits multiple display windows to be presented in the graphical user interface simultaneously, with each display window providing an interface to a different application or to a different instance of the same application. A cursor or pointer in the graphical user interface may be manipulated by a user through a pointing device such as a mouse or touch screen. The position of the cursor/pointer may be changed and/or an event, such as clicking a mouse button or touching a touch screen, may be generated to actuate a desired response. Examples of operating systems that may be used in a data processing system may include Microsoft Windows, Linux, UNIX, iOS, and Android operating systems. Also, examples of data stores include data files, data tables, relational database (e.g., Oracle, Microsoft SQL Server), database servers, or any other structure and/or device that is capable of storing data, which is retrievable by a processor.

The communication controllers 1012 may be connected to the network 1014 (not a part of data processing system 1000), which can be any public or private data processing system network or combination of networks, as known to those of skill in the art, including the Internet. Data processing system 1000 can communicate over the network 1014 with one or more other data processing systems such as a server 1034 (also not part of the data processing system 1000). However, an alternative data processing system may correspond to a plurality of data processing systems implemented as part of a distributed system in which processors associated with several data processing systems may be in communication by way of one or more network connections and may collectively perform tasks described as being performed by a single data processing system. Thus, it is to be understood that when referring to a data processing system, such a system may be implemented across several data processing systems organized in a distributed system in communication with each other via a network.

Further, the term "controller" means any device, system or part thereof that controls at least one operation, whether such a device is implemented in hardware, firmware, software or some combination of at least two of the same. It should be noted that the functionality associated with any particular controller may be centralized or distributed, whether locally or remotely.

In addition, it should be appreciated that data processing systems may be implemented as virtual machines in a virtual machine architecture or cloud environment. For example, the processor 1002 and associated components may correspond to a virtual machine executing in a virtual machine environment of one or more servers. Examples of virtual machine architectures include VMware ESCi, Microsoft Hyper-V, Xen, and KVM.

Those of ordinary skill in the art will appreciate that the hardware depicted for the data processing system may vary for particular implementations. For example, the data processing system 1000 in this example may correspond to a computer, workstation, server, PC, notebook computer, tablet, mobile phone, and/or any other type of apparatus/system that is operative to process data and carry out functionality and features described herein associated with the operation of a data processing system, computer, processor, and/or a controller discussed herein. The depicted example is provided for the purpose of explanation only and is not meant to imply architectural limitations with respect to the present disclosure.

Also, it should be noted that the processor described herein may be located in a server that is remote from the display and input devices described herein. In such an example, the described display device and input device may be included in a client device that communicates with the server (and/or a virtual machine executing on the server) through a wired or wireless network (which may include the Internet). In some embodiments, such a client device, for example, may execute a remote desktop application or may correspond to a portal device that carries out a remote desktop protocol with the server in order to send inputs from an input device to the server and receive visual information from the server to display through a display device. Examples of such remote desktop protocols include Teradici's PCoIP, Microsoft's RDP, and the RFB protocol. In such examples, the processor described herein may correspond to a virtual processor of a virtual machine executing in a physical processor of the server.

As used herein, the terms "component" and "system" are intended to encompass hardware, software, or a combination of hardware and software. Thus, for example, a system or component may be a process, a process executing on a processor, or a processor. Additionally, a component or system may be localized on a single device or distributed across several devices.

Also, as used herein a processor corresponds to any electronic device that is configured via hardware circuits, software, and/or firmware to process data. For example, processors described herein may correspond to one or more (or a combination) of a microprocessor, CPU, FPGA, ASIC, or any other integrated circuit (IC) or other type of circuit that is capable of processing data in a data processing system, which may have the form of a controller board, computer, server, mobile phone, and/or any other type of electronic device.

Those skilled in the art will recognize that, for simplicity and clarity, the full structure and operation of all data processing systems suitable for use with the present disclosure is not being depicted or described herein. Instead, only so much of a data processing system as is unique to the present disclosure or necessary for an understanding of the present disclosure is depicted and described. The remainder of the construction and operation of data processing system 1000 may conform to any of the various current implementations and practices known in the art.

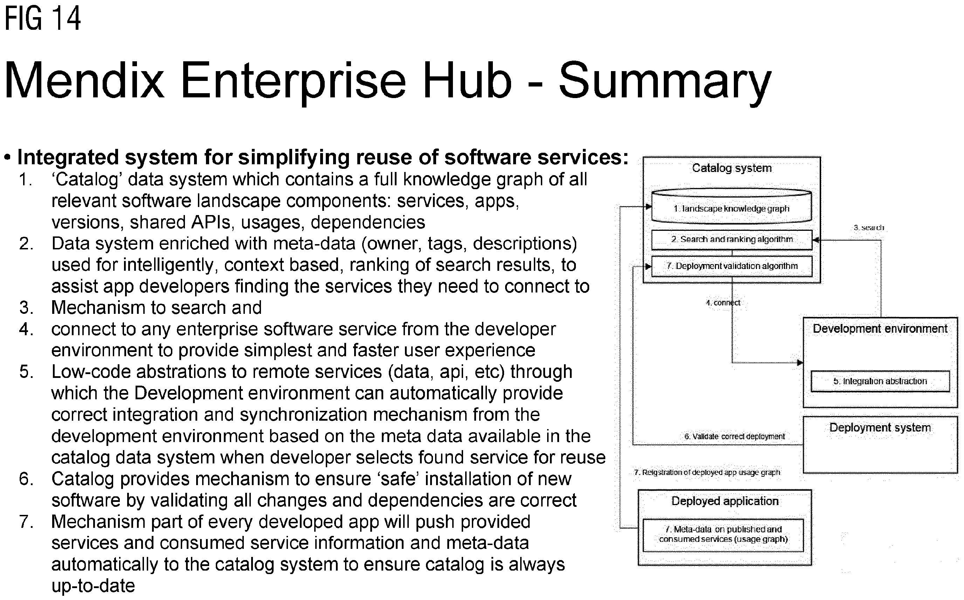

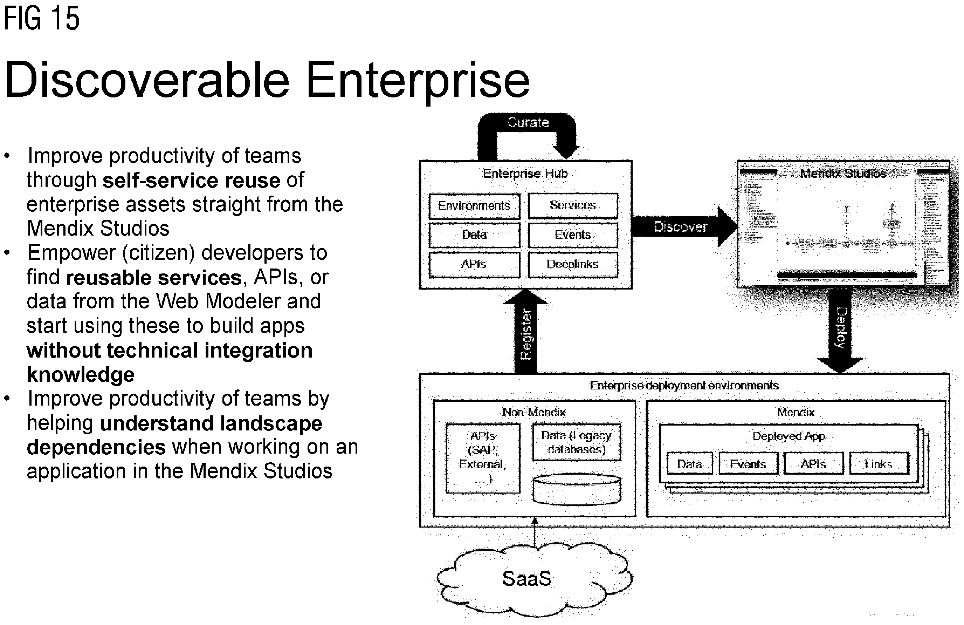

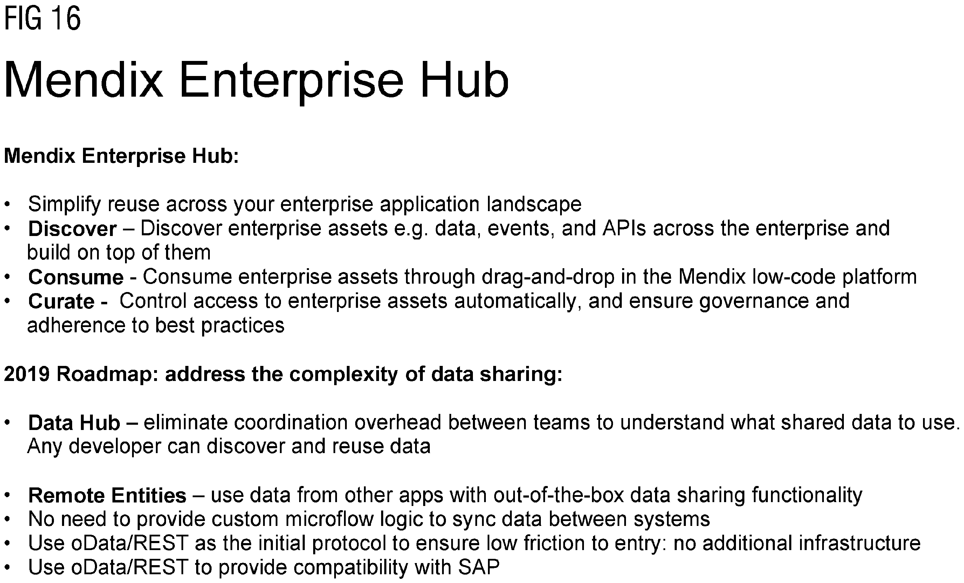

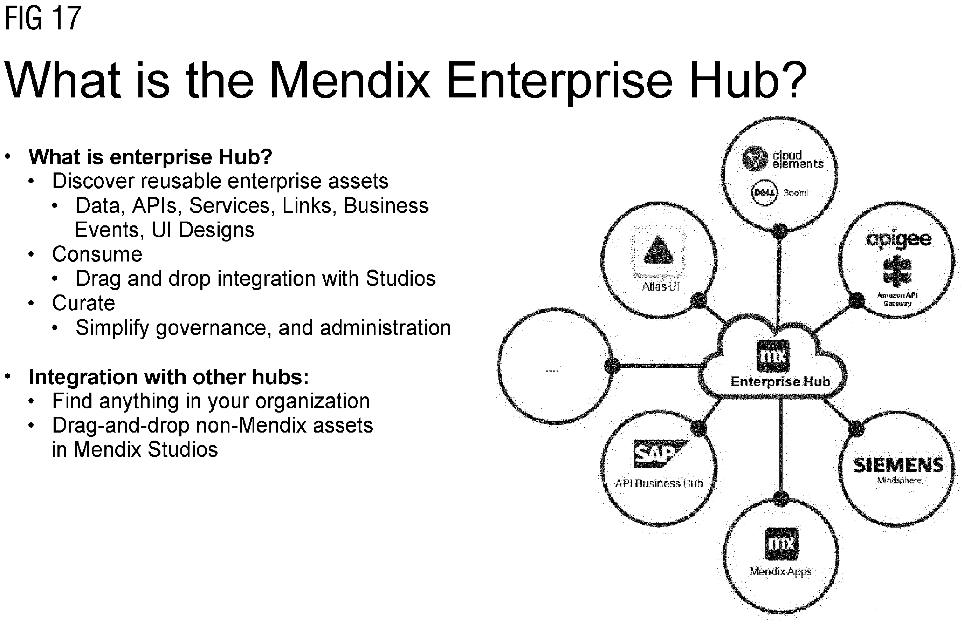

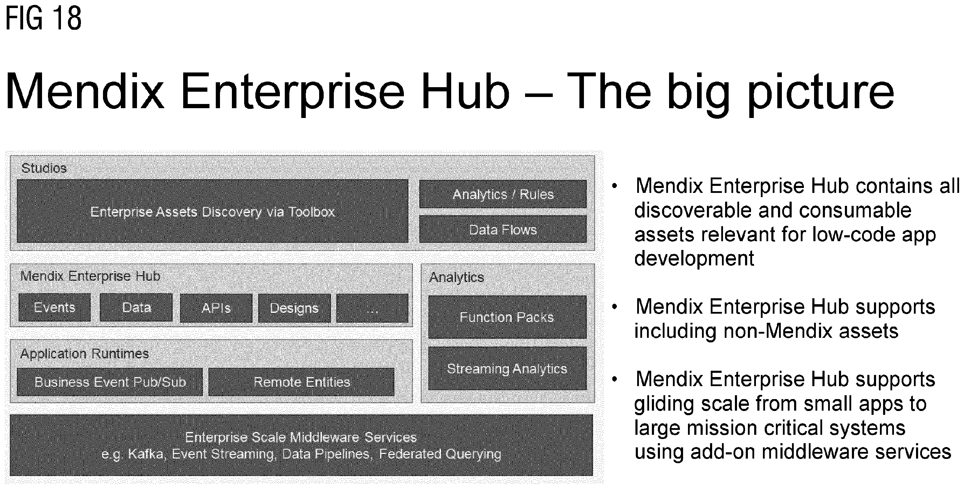

Referring now to Figs. 14-18, further information on facilitating creating an app in a product system is illustrated.

Generally, the "catalog" mentioned in Figs. 14-18 may refer to the repository 118.

Also, it should be understood that the words or phrases used herein should be construed broadly, unless expressly limited in some examples. For example, the terms "include" and "comprise," as well as derivatives thereof, mean inclusion without limitation. The singular forms "a", "an" and "the" are intended to include the plural forms as well, unless the context clearly indicates otherwise. Further, the term "and/or" as used herein refers to and encompasses any and all possible combinations of one or more of the associated listed items. The term "or" is inclusive, meaning and/or, unless the context clearly indicates otherwise. The phrases "associated with" and "associated therewith," as well as derivatives thereof, may mean to include, be included within, interconnect with, contain, be contained within, connect to or with, couple to or with, be communicable with, cooperate with, interleave, juxtapose, be proximate to, be bound to or with, have, have a property of, or the like.

Also, although the terms "first", "second", "third" and so forth may be used herein to describe various elements, functions, or acts, these elements, functions, or acts should not be limited by these terms. Rather these numeral adjectives are used to distinguish different elements, functions or acts from each other. For example, a first element, function, or act could be termed a second element, function, or act, and, similarly, a second element, function, or act could be termed a first element, function, or act, without departing from the scope of the present disclosure.

In addition, phrases such as "processor is configured to" carry out one or more functions or processes, may mean the processor is operatively configured to or operably configured to carry out the functions or processes via software, firmware, and/or wired circuits. For example, a processor that is configured to carry out a function/process may correspond to a processor that is executing the software/firmware, which is programmed to cause the processor to carry out the function/process and/or may correspond to a processor that has the software/firmware in a memory or storage device that is available to be executed by the processor to carry out the function/process. It should also be noted that a processor that is "configured to" carry out one or more functions or processes, may also correspond to a processor circuit particularly fabricated or "wired" to carry out the functions or processes (e.g., an ASIC or FPGA design). Further the phrase "at least one" before an element (e.g., a processor) that is configured to carry out more than one function may correspond to one or more elements (e.g., processors) that each carry out the functions and may also correspond to two or more of the elements (e.g., processors) that respectively carry out different ones of the one or more different functions.

In addition, the term "adjacent to" may mean: that an element is relatively near to but not in contact with a further element; or that the element is in contact with the further portion, unless the context clearly indicates otherwise.

## Claims

1. Computer-implemented method of creating an app, including:
providing (1204) an app development user interface (UI) to a user for developing the app;
providing (1206) a search UI to the user for searching in a repository for storing artifacts which are reusable for app development;
capturing (1208) the user's search intent in response to user interactions with the search UI;
importing (1210) at least one artifact corresponding to the captured user's search intent from the repository to the app development UI;
developing (1212) the app through the app development UI by using the imported at least one artifact;
deploying the created app including releasing the created app to end users for whom the created app is then installable and activatable;
storing at least one portion of the created and deployed app as artifact which is reusable for app development in the repository after a successful first deployment of the created app; and
storing metadata of the stored at least one portion of the created and deployed app in the repository.

2. Computer-implemented method according to claim 1, further including:
displaying a set of artifacts stored in the repository corresponding to the captured user's search intent in the search UI; and
capturing the user's intent to reuse at least one artifact of the displayed set of artifacts in response to user interactions with the search UI.

3. Computer-implemented method according to claim 2, further including:
retrieving metadata of the artifacts stored in the repository;
determining a ranking of the artifacts stored in the repository corresponding to a degree of conformance of the retrieved metadata with the captured user's search intent; and
displaying the set of artifacts according to the determined ranking of the artifacts.

4. Computer-implemented method to claim 3, the metadata including at least one of artifact owner, artifact tags, artifact descriptions, artifact key words, artifact popularity, artifact versions, artifact similarity, artifact purposes, artifact areas, or any combination thereof, wherein artifact popularity relates to the number of deployments for a given app and wherein artifact similarity relates to the application area or the use areas of the respective artifact.

5. Computer-implemented method according to any one of the preceding claims, wherein the artifacts include app links.

6. Computer-implemented method according to any one of the preceding claims, wherein the artifacts include at least one of app data, app components, app architecture, app programming interfaces (APIs), app services, app usages, app description, app dependencies, artifact dependencies, app environments, app tags, business events, notifications, app interfaces, trigger information, user interface (UI) designs, knowledge graphs, maps of reusable IT assets, links to pages, or any combination thereof.

7. Computer-implemented method according to any one of the preceding claims, wherein creating the app includes using visual model-based representations included in a low-code software development platform.

8. Computer-implemented method according to any one of the preceding claims, wherein the created app and/or the artifacts stored in the repository include(s) standardized modules concerning at least one of data providers, data consumers, data update mechanisms, data formats, available data treatment operations, app identity and access management (IAM), or any combination thereof.

9. Computer-implemented method according to any of the preceding claims, wherein the stored metadata includes at least one of deployment information, app services, and information on a dependency between the stored at least one portion of the created and deployed app and the imported at least one artifact which has been used for developing the created and deployed app, or any combination thereof.

10. Computer-implemented method according to any of the preceding claims, further including:
updating the stored at least one portion in the repository upon amending the at least one portion in the developed and deployed app and/or
updating the stored metadata of the stored at least one portion in the repository upon amending the metadata of the stored at least one portion.

11. Computer-implemented method according to any of the preceding claims, wherein the stored metadata of the stored at least one portion includes information on access rights for accessing the stored at least one portion; and
wherein the stored at least one portion is only accessible to users having suitable access rights.

12. Computer-implemented method according to any of the preceding claims, wherein the stored metadata of the stored at least one portion includes information on access rights for deploying and/or using app which are developed using the stored at least one portion;
wherein the stored at least one portion is only accessible to users having suitable access rights and/or
the developed app may only be deployed and/or used by users having suitable access rights.

13. Computer-implemented method according to any one of the preceding claims, wherein the created app is suitable for deployment to hardware devices including smartphones, handheld computers, tablet computers, desktop computers, smartwatches, TVs, to cloud computing platforms, to Internet of Things (IoT) operating systems or to Industrial Internet of Things (IIoT) systems.

14. Computer system arranged and configured to execute the steps of the computer-implemented method according to any one of the preceding claims.

15. A computer-readable medium encoded with executable instructions, that when executed, cause the computer system according to claim 14 to carry out a method according to any one of claims 1 to 13.

## Patentansprüche

1. Computerimplementiertes Verfahren zum Erzeugen einer App, beinhaltend:
Bereitstellen (1204) einer App-Entwicklungs-Benutzerschnittstelle (UI) für einen Benutzer zum Entwickeln der App;
Bereitstellen (1206) einer Such-UI für den Benutzer zum Suchen in einem Repositorium zum Speichern von Artefakten, die für die App-Entwicklung wiederverwendbar sind;
Erfassen (1208) der Suchabsicht des Benutzers als Reaktion auf Benutzerinteraktionen mit der Such-UI;
Importieren (1210) mindestens eines Artefakts entsprechend der erfassten Suchabsicht des Benutzers aus dem Repositorium in die App-Entwicklungs-UI;
Entwickeln (1212) der App über die App-Entwicklungs-UI unter Verwendung des importierten mindestens einen Artefakts;
Einsetzen der erzeugten App einschließlich Freigeben der erzeugten App an Endbenutzer, für die die erzeugte App dann installierbar und aktivierbar ist;
Speichern mindestens eines Teils der erzeugten und eingesetzten App als Artefakt, das für die App-Entwicklung wiederverwendbar ist, im Repositorium nach einem erfolgreichen ersten Einsatz der erzeugten App; und
Speichern von Metadaten des gespeicherten mindestens einen Teils der erzeugten und eingesetzten App im Repositorium.

2. Computerimplementiertes Verfahren nach Anspruch 1, ferner beinhaltend:
Anzeigen eines Satzes von Artefakten, die im Repositorium gespeichert sind, entsprechend der erfassten Suchabsicht des Benutzers in der Such-UI; und
Erfassen der Absicht des Benutzers, mindestens ein Artefakt des angezeigten Satzes von Artefakten wiederzuverwenden, als Reaktion auf Benutzerinteraktionen mit der Such-UI.

3. Computerimplementiertes Verfahren nach Anspruch 2, ferner beinhaltend:
Abrufen von Metadaten der im Repositorium gespeicherten Artefakte;
Bestimmen einer Rangfolge der im Repositorium gespeicherten Artefakte entsprechend einem Konformitätsgrad der abgerufenen Metadaten mit der erfassten Suchabsicht des Benutzers; und
Anzeigen des Satzes von Artefakten gemäß der bestimmten Rangfolge der Artefakte.

4. Computerimplementiertes Verfahren nach Anspruch 3, wobei die Metadaten mindestens eines von Artefakteigentümer, Artefakt-Tags, Artefaktbeschreibungen, Artefaktschlüsselwörtern, Artefaktpopularität, Artefaktversionen, Artefaktähnlichkeit, Artefaktzwecken, Artefaktgebieten oder eine beliebige Kombination davon einschließen, wobei sich die Artefaktpopularität auf die Anzahl von Einsätzen für eine gegebene App bezieht und wobei sich die Artefaktähnlichkeit auf den Anwendungsbereich oder die Nutzungsbereiche des jeweiligen Artefakts bezieht.

5. Computerimplementiertes Verfahren nach einem der vorstehenden Ansprüche, wobei die Artefakte App-Links einschließen.

6. Computerimplementiertes Verfahren nach einem der vorstehenden Ansprüche, wobei die Artefakte mindestens eines von App-Daten, App-Komponenten, App-Architektur, App-Programmierschnittstellen (APIs), App-Diensten, App-Nutzungen, App-Beschreibung, App-Abhängigkeiten, Artefaktabhängigkeiten, App-Umgebungen, App-Tags, Geschäftsereignissen, Benachrichtigungen, App-Schnittstellen, Auslöseinformationen, Benutzerschnittstellen(UI)-Designs, Wissensgraphen, Karten wiederverwendbarer IT-Assets, Links zu Seiten oder eine beliebige Kombination davon einschließen.

7. Computerimplementiertes Verfahren nach einem der vorstehenden Ansprüche, wobei das Erzeugen der App das Verwenden visueller modellbasierter Repräsentationen einschließt, die in einer Low-Code-Softwareentwicklungsplattform enthalten sind.

8. Computerimplementiertes Verfahren nach einem der vorstehenden Ansprüche, wobei die erzeugte App und/oder die im Repositorium gespeicherten Artefakte standardisierte Module bezüglich mindestens eines von Datenanbietern, Datenverbrauchern, Datenaktualisierungsmechanismen, Datenformaten, verfügbaren Datenbehandlungsoperationen, App-Identitäts- und -Zugriffsmanagement (IAM) oder eine beliebige Kombination davon einschließen.

9. Computerimplementiertes Verfahren nach einem der vorstehenden Ansprüche, wobei die gespeicherten Metadaten mindestens eines von Entwicklungsinformationen, App-Diensten und Informationen über eine Abhängigkeit zwischen dem gespeicherten mindestens einen Teil der erzeugten und eingesetzten App und dem importierten mindestens einen Artefakt, das zur Entwicklung der erzeugten und eingesetzten App verwendet wurde, oder eine beliebige Kombination davon einschließen.

10. Computerimplementiertes Verfahren nach einem der vorstehenden Ansprüche, ferner beinhaltend:
Aktualisieren des gespeicherten mindestens einen Teils im Repositorium beim Ändern des mindestens einen Teils in der entwickelten und eingesetzten App, und/oder
Aktualisieren der gespeicherten Metadaten des gespeicherten mindestens einen Teils im Repositorium beim Ändern der Metadaten des gespeicherten mindestens einen Teils.

11. Computerimplementiertes Verfahren nach einem der vorstehenden Ansprüche, wobei die gespeicherten Metadaten des gespeicherten mindestens einen Teils Informationen über Zugriffsrechte zum Zugreifen auf den gespeicherten mindestens einen Teil einschließen; und
wobei der gespeicherte mindestens eine Teil nur für Benutzer zugänglich ist, die geeignete Zugriffsrechte aufweisen.

12. Computerimplementiertes Verfahren nach einem der vorstehenden Ansprüche, wobei die gespeicherten Metadaten des gespeicherten mindestens einen Teils Informationen über Zugriffsrechte zum Einsetzen und/oder Verwenden der App einschließen, die unter Verwendung des gespeicherten mindestens einen Teils entwickelt wird;
wobei der gespeicherte mindestens eine Teil nur für Benutzer zugänglich ist, die geeignete Zugriffsrechte aufweisen, und/oder die entwickelte App nur durch Benutzer mit geeigneten Zugriffsrechten eingesetzt und/oder verwendet werden kann.

13. Computerimplementiertes Verfahren nach einem der vorstehenden Ansprüche, wobei die erzeugte App für den Einsatz in Hardwarevorrichtungen einschließlich Smartphones, handgehaltenen Computern, Tablet-Computern, Desktop-Computern, Smartwatches, Fernsehern, in Cloud-Computing-Plattformen, in Internet-der-Dinge(IoT)-Betriebssystemen oder in industriellen Internet-der-Dinge(IIoT)-Systemen geeignet ist.

14. Computersystem, das dazu eingerichtet und ausgelegt ist, die Schritte des computerimplementierten Verfahrens nach einem der vorstehenden Ansprüche auszuführen.

15. Computerlesbares Medium, das mit ausführbaren Anweisungen codiert ist, die, wenn sie ausgeführt werden, bewirken, dass das Computersystem nach Anspruch 14 ein Verfahren nach einem der Ansprüche 1 bis 13 ausführt.

## Revendications

1. Procédé mis en oeuvre par ordinateur de création d'une application, comprenant :
on procure (1204) à un utilisateur une interface (UI) d'utilisateur de développement d'une application pour développer l'application ;
on procure (1206) à l'utilisateur une recherche UI pour rechercher dans un gisement de mise en mémoire d'artefacts, qui peuvent être réutilisés pour un développement d'application ;
on acquiert (1208) l'intention de recherche de l'utilisateur en réaction à des interactions de l'utilisateur avec la recherche UI ;
on importe (1210) au moins un artefact correspondant à l'intention acquise de recherche d'utilisateur dans le gisement pour le développement UI d'une application ;
on développe (1212) l'application par le développement UI d'application en utilisant le au moins un artefact importé ;
on déploie l'application créée y compris en débloquant l'application créée auprès d'utilisateurs finaux pour lesquels l'application créée peut alors être installée et activée ;
on met en mémoire au moins une partie de l'application créée déployée sous la forme d'un artefact qui peut être réutilisé pour un développement d'application dans le gisement après un premier déploiement couronné de succès de l'application créée et on met en mémoire une métadonnée de la au moins une partie mise en mémoire de l'application créée et déployée dans le gisement.

2. Procédé mis en oeuvre par ordinateur suivant la revendication 1, comprenant en outre :
on affiche un ensemble d'artefacts mis en mémoire dans le gisement correspond à l'intention de recherche acquise de l'utilisateur dans la recherche UI ; et
on acquiert l'intention de l'utilisateur pour réutiliser au moins un artefact de l'ensemble affiché d'artefacts en réaction à des interactions d'utilisateur avec la recherche UI.

3. Procédé mis en oeuvre par ordinateur suivant la revendication 2, comprenant en outre :
on extrait une métadonnée des artefacts mis en mémoire dans le gisement ;
on détermine un rang des artefacts mis en mémoire dans le gisement correspondant à un degré de conformité de la métadonnée extraite avec l'intention de recherche acquise de l'utilisateur ; et
on affiche l'ensemble d'artefacts suivant le rang déterminé des artefacts.

4. Procédé mis en oeuvre par ordinateur suivant la revendication 3, la métadonnée comprenant au moins un propriétaire d'artefact, des étiquettes d'artefact, des descriptions d'artefact, des mots-clés d'artefact, une popularité d'artefact, des versions d'artefact, une similarité d'artefact, des dessins d'artefact, les zones d'artefact ou leurs combinaisons, dans lequel une popularité d'artefact se rapporte au nombre de déploiement pour une application donnée et dans lequel une similarité d'artefact se rapporte à la zone d'application ou aux zones d'utilisation de l'artefact respectif.

5. Procédé mis en oeuvre par ordinateur suivant l'une quelconque des revendications précédentes,
dans lequel les artefacts comprennent des liaisons d'application.

6. Procédé mis en oeuvre par ordinateur suivant l'une quelconque des revendications précédentes, dans lequel les artefacts comprennent au moins l'un d'une donnée d'application, de composants d'application, d'une architecture d'application, d'interfaces de programmation d'application (APIs), de services d'application, d'usages d'application, d'une description d'application, de dépendances d'application, de dépendances d'artefact, d'environnements d'application, d'étiquettes d'application, d'événements des affaires, de notifications des interfaces d'application, d'une information de déclenchement, de concepts d'interfaces (UI) d'utilisateur, de graphes de connaissance, de cartes d'activités réutilisables, de liaisons à des pages ou de leurs combinaisons.

7. Procédé mis en oeuvre par ordinateur suivant l'une quelconque des revendications précédentes, dans lequel créer l'application comprend, utiliser des représentations à base de modèles visuels inclus dans une plateforme de développement de logiciels à faible code.

8. Procédé mis en oeuvre par ordinateur suivant l'une quelconque des revendications précédentes, dans lequel l'application créée et/ou les artefacts mis en mémoire dans le gisement comprend (comprennent) des modules normalisés concernent non seulement au moins l'un de fournisseurs de données, consommateurs de données, mécanismes de mise à jour de données, formats de données, opérations disponibles de traitement de données, identité d'application et/ou gestion d'accès (IAM) ou leurs combinaisons.

9. Procédé mis en oeuvre par ordinateur suivant l'une quelconque des revendications précédentes, dans lequel la métadonnée mise en mémoire comprend au moins l'un d'une information de déploiement, de services d'application et d'une information sur une dépendance entre la au moins une partie en mémoire de l'application créée et déployée et le au moins un artefact importé, qui a été utilisé pour développer l'application créée et déployée ou leurs combinaisons.

10. Procédé mis en oeuvre par ordinateur suivant l'une quelconque des revendications précédentes, comprenant en outre :
on met à jour la au moins une partie de mise en mémoire dans le gisement après avoir modifié la au moins une partie dans l'application développée et déployée et/ou
on met à jour la métadonnée mise en mémoire où la au moins une partie mise en mémoire dans le gisement après avoir modifié la métadonnée de la au moins une partie mise en mémoire.

11. Procédé mis en oeuvre par ordinateur suivant l'une quelconque des revendications précédentes, dans lequel la métadonnée mise en mémoire de la au moins une partie mise en mémoire comprend une information sur des droits d'accès pour accéder à la au moins une partie mise en mémoire et dans lequel la au moins une partie mise en mémoire est accessible à seulement des utilisateurs ayant des droits d'accès appropriés.

12. Procédé mis en oeuvre par ordinateur suivant l'une quelconque des revendications précédentes, dans lequel la métadonnée mise en mémoire de la au moins une partie mise en mémoire comprend de l'information sur des droits d'accès pour déployer et/ou utiliser des applications qui sont développées en utilisant la au moins une partie mise en mémoire ;
dans lequel la au moins une partie mise en mémoire est accessible seulement à des utilisateurs ayant des droits d'accès appropriés et/ou
l'application développée peut être déployée et/ou utilisée seulement par des utilisateurs ayant des droits d'accès appropriés.

13. Procédé mis en oeuvre par ordinateur suivant l'une quelconque des revendications précédentes, dans lequel l'application créée convient pour être déployée sur des dispositifs matériels y compris des téléphones intelligents, des ordinateurs de poche, des ordinateurs à tablette, des ordinateurs de bureau, des montres intelligentes, des TVs, des plateformes de calcul de nuage, des systèmes opérant sur l'Internet des objets (IoT), ou des systèmes industriels de l'Internet des objets (IIoT).

14. Système d'ordinateur disposé et configuré pour exécuter les stades du procédé mis en oeuvre par ordinateur suivant l'une quelconque des revendications précédentes.

15. Support déchiffrable par ordinateur codé par des instructions pouvant être exécutées, qui, lorsqu'elles sont exécutées, font que le système d'ordinateur de la revendication 14 effectue un procédé suivant l'une quelconque des revendications 1 à 13.
